# EUROPEAN PATENT APPLICATION

(11) **EP 4 560 050 A1**
(43) Date of publication of application: **28.05.2025**
(21) Application number: 24214176.0
(22) Date of filing: 20.11.2024
(51) Int. Cl.: C25B 9/67, C25B 9/70, C25B 15/021

(54) **ELECTROLYZER POWER CONDITIONING SYSTEM AND METHOD OF CONTROLLING THE SAME**

(30) Priority: 21.11.2023 US 202363601370 P
(71) Applicant: Bloom Energy Corporation, San Jose, CA 95134 (US)
(72) Inventor: PMSVVSV, Prasad, San Jose, 95134 (US)
(74) Representative: Wichmann, Hendrik

(57) **Abstract**

A method of operating an electrolyzer system includes providing electric power from a main DC-DC converter to an electrolyzer column and to an auxiliary DC-DC converter, and providing electric power from the auxiliary DC-DC converter to a heater to heat the electrolyzer column.

## Description

### FIELD

The present disclosure is directed to electrolyzer systems in general and to power conditioning systems for electrolyzer systems in particular.

### BACKGROUND

In a solid oxide electrolyzer cell (SOEC), a cathode electrode is separated from an anode electrode by a solid oxide electrolyte. When a SOEC is used to produce hydrogen through electrolysis, a positive potential is applied to the air side of the SOEC and oxygen ions are transported from the fuel (e.g., steam) side to the air side. Throughout this specification, the SOEC anode will be referred to as the air electrode, and the SOEC cathode will be referred to as the fuel electrode. During SOEC operation, water (e.g., steam) in the fuel stream is reduced (H₂O + 2e⁻→O²⁻ + H₂) to form H₂ gas and O²⁻ ions, the O²⁻ ions are transported through the solid electrolyte, and then oxidized (e.g., by an air inlet stream) on the air side (O²⁻ to O₂) to produce molecular oxygen (e.g., oxygen enriched air).

### SUMMARY

An embodiment method of operating an electrolyzer system includes providing electric power from a main DC-DC converter to an electrolyzer column containing electrolyzer cells and to an auxiliary DC-DC converter, and providing the electric power from the auxiliary DC-DC converter to a heater to heat the electrolyzer column.

An embodiment method of operating an electrolyzer system includes: during a cold start operating mode, providing electric power from a DC-DC converter to a heater to heat an electrolyzer column comprising electrolyzer cells until the electrolyzer column reaches a target steady state operating temperature by closing an auxiliary load isolation switch between the DC-DC converter and the heater, and opening a main load isolation switch between the DC-DC converter and the electrolyzer column to prevent electric power from flowing from the DC-DC converter to the electrolyzer column; and during a steady state operating mode, closing the main load isolation switch to provide electric power from the DC-DC converter to the electrolyzer column such that the electrolyzer column electrolyzes steam to generate a hydrogen product stream, and opening the auxiliary load isolation switch between the DC-DC converter and the heater to prevent electric power from flowing from the DC-DC converter to the heater.

An embodiment system comprises an electrolyzer column comprising electrolyzer cells, a first terminal and a second terminal; a heater configured to heat the electrolyzer column; and a power conditioning system. The power conditioning system comprises a main DC-DC converter comprising a first output terminal and a second output terminal; an auxiliary DC-DC converter comprising a first input terminal, a second input terminal, a first output terminal electrically connected to the heater, and a second output terminal electrically connected to the heater; a main load isolation switch electrically connecting the first output terminal of the main DC-DC converter to the first terminal of the electrolyzer column; and an auxiliary load isolation switch electrically connecting the first output terminal of the main DC-DC converter to the first input terminal of the auxiliary DC-DC converter.

### BRIEF DESCRIPTION OF THE DRAWINGS

The accompanying drawings, which are incorporated herein and constitute part of this specification, illustrate example embodiments of the invention, and together with the general description given above and the detailed description given below, serve to explain the features of the invention.
FIG. 1A is a perspective view of an electrolyzer cell stack, FIG. 1B is a side cross-sectional view of a portion of the stack of FIG. 1A, and FIG. 1C is a perspective view of a modular electrolyzer system containing a plurality of modules located in separate cabinets on a common base.
FIG. 2 is a schematic view of a portion of an electrolyzer system, according to various embodiments of the present disclosure.
FIG. 3 is a schematic view of an electrolyzer module that may be included in the electrolyzer system of FIG. 2.
FIG. 4 is a circuit diagram illustrating a power conditioning system, according to an embodiment of the present disclosure.
FIG. 5 is a circuit diagram of an alternative configuration of the power conditioning system, according to an embodiment of the present disclosure.
FIG. 6 shows two timeline graphs, the upper graph illustrating electrolzyer column temperature and the lower graph illustrating the amount of power applied to an electrolyzer column and a heater during different operational phases of an electrolyzer module.
FIG. 7 is a circuit diagram illustrating an operating mode in which a main load isolation switch is closed such that the electrolyzer column is receiving power from the main DC-DC converter, while the auxiliary load isolation switch is open such that the heater is not receiving power.
FIG. 8 is a circuit diagram illustrating voltage and current feedback sensors for control loops, according to an embodiment of the present disclosure.
FIG. 9 is a block diagram of a control loop for the auxiliary DC-DC converter, according to an embodiment of the present disclosure.
FIG. 10 is a block diagram of a control loop for the main DC-DC converter, according to an embodiment of the present disclosure.
FIG. 11 is a circuit diagram illustrating an additional steam heater and an additional steam heater DC-DC converter, according to an embodiment of the present disclosure.

### DETAILED DESCRIPTION

The various embodiments will be described in detail with reference to the accompanying drawings. The drawings are not necessarily to scale and are intended to illustrate various features of the invention. Wherever possible, the same reference numbers will be used throughout the drawings to refer to the same or like parts. References made to particular examples and implementations are for illustrative purposes and are not intended to limit the scope of the invention or the claims.

Ranges may be expressed herein as from "about" one particular value, and/or to "about" another particular value. When such a range is expressed, examples include from the one particular value and/or to the other particular value. Similarly, when values are expressed as approximations, by use of the antecedent "about" or "substantially" it will be understood that the particular value forms another aspect. In some embodiments, a value of "about X" may include values of +/- 1% X. It will be further understood that the endpoints of each of the ranges are significant both in relation to the other endpoint, and independently of the other endpoint.

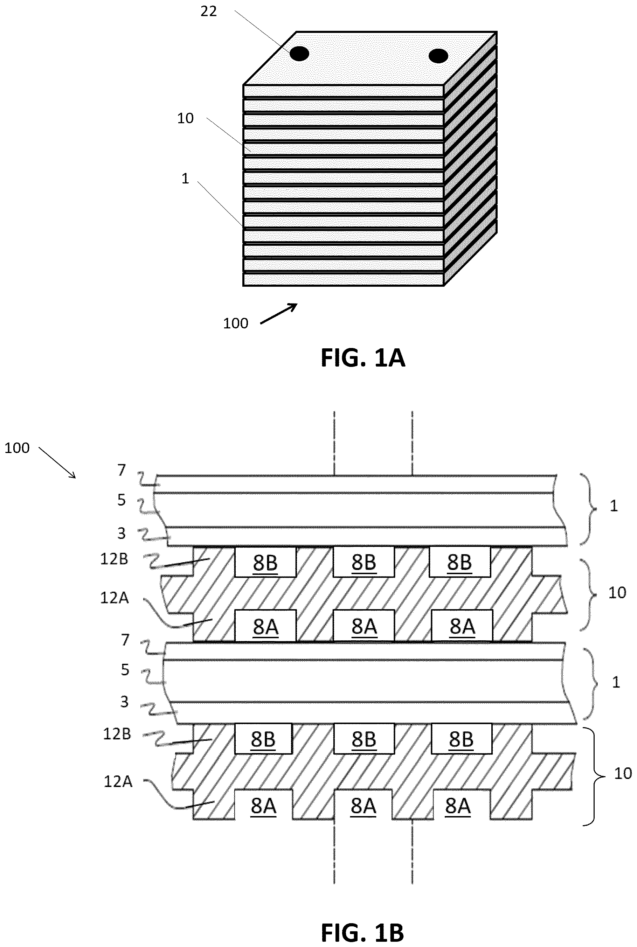

FIG. 1A is a perspective view of an electrolyzer cell stack 100, such as a solid oxide electrolyzer cell (SOEC) stack, and FIG. 1B is a side cross-sectional view of a portion of the stack 100 of FIG. 1A. Referring to FIGS. 1A and 1B, the stack 100 includes multiple electrolyzer cells (e.g., SOECs) 1 that are separated by interconnects 10, which may also be referred to as gas flow separator plates or bipolar plates. Each electrolyzer cell 1 includes an air electrode 3, an electrolyte 5, such as a solid oxide electrolyte for a SOEC, and a fuel electrode 7. The stack 100 also includes internal fuel riser channels 22.

Each interconnect 10 electrically connects adjacent electrolyzer cells 1 in the stack 100. In particular, an interconnect 10 may electrically connect the fuel electrode 7 of one electrolyzer cell 1 to the air electrode 3 of an adjacent electrolyzer cell 1. FIG. 1B shows that the lower electrolyzer cell 1 is located between two interconnects 10.

Various materials may be used for the air electrode 3, electrolyte 5, and fuel electrode 7. For example, the air electrode 3 may comprise an electrically conductive material, such as an electrically conductive perovskite material, such as lanthanum strontium manganite (LSM). Other conductive perovskites, such as LSCo, etc., or metals, such as Pt, may also be used. The electrolyte 5 may comprise a stabilized zirconia, such as scandia stabilized zirconia (SSZ) or yttria stabilized zirconia (YSZ), yttria-ceria-stabilized zirconia (YCSZ), ytterbia-ceria-scandia-stabilized zirconia (YbCSSZ) or blends thereof. In YbCSSZ, scandia may be present in an amount equal to 9 to 11 mol %, such as 10 mol %, ceria may present in amount greater than 0 and equal to or less than 3 mol %, for example 0.5 mol % to 2.5 mol %, such as 1 mol %, and ytterbia may be present in an amount greater than 0 and equal to or less than 2.5 mol %, for example 0.5 mol % to 2 mol %, such as 1 mol %, as disclosed in U.S. Pat. No. 8,580,456, which is incorporated herein by reference. Alternatively, the electrolyte 5 may comprise another ionically conductive material, such as a doped ceria. The fuel electrode 7 may comprise a cermet comprising a nickel containing phase and a ceramic phase. The nickel containing phase may consist entirely of nickel in a reduced state. The ceramic phase may comprise a stabilized zirconia, such as yttria and/or scandia stabilized zirconia and/or a doped ceria, such as gadolinia, yttria and/or samaria doped ceria. The electrodes and the electrolyte may each comprise one or more sublayers of one or more of the above described materials.

Each interconnect 10 includes fuel ribs 12A that at least partially define fuel channels 8A, and air ribs 12B that at least partially define air channels 8B. The interconnect 10 may operate as a gas-fuel separator that separates a fuel, such as steam, flowing to the fuel electrode 7 of one electrolyzer cell 1 in the stack 100 from oxidant, such as air, flowing to the air electrode 3 of an adjacent electrolyzer cell 1 in the stack 100. At either end of the stack 100, there may be an air end plate or fuel end plate (not shown) for providing air or fuel, respectively, to the end electrode. Alternatively, the air end plate or fuel end plate may comprise the same interconnect structure used throughout the stack.

Each interconnect 10 may be made of or may contain electrically conductive material, such as a metal alloy (e.g., chromium-iron alloy) which has a similar coefficient of thermal expansion to that of the solid oxide electrolyte in the cells (e.g., a difference of 0-10%). For example, the interconnects 10 may comprise a metal (e.g., a chromium-iron alloy, such as 4-6 weight percent iron, optionally 1 or less weight percent yttrium and balance chromium alloy). Alternatively, any other suitable conductive interconnect material, such as stainless steel (e.g., ferritic stainless steel, SS446, SS430, etc.) or iron-chromium alloy (e.g., Crofer^{tm} 22 APU alloy which contains 20 to 24 wt.% Cr, less than 1 wt.% Mn, Ti and La, and balance Fe, or ZMG^{tm} 232L alloy which contains 21 to 23 wt.% Cr, 1 wt.% Mn and less than 1 wt.% Si, C, Ni, Al, Zr and La, and balance Fe) may be utilized.

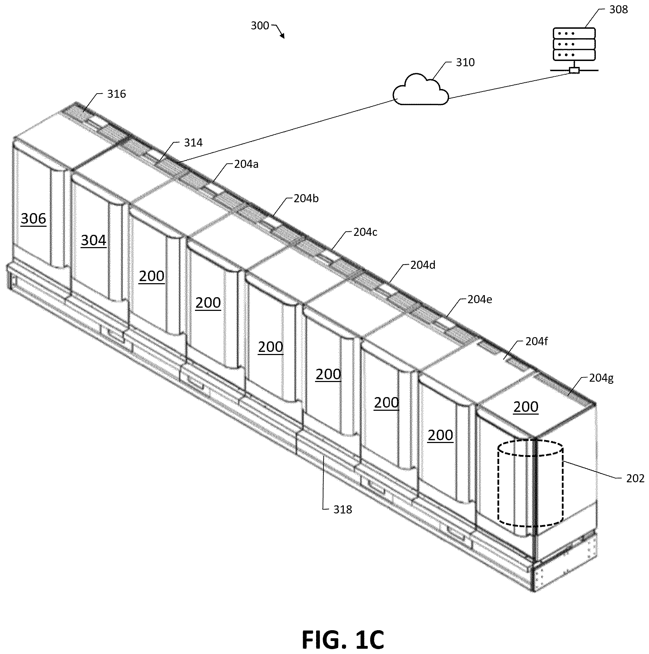

FIG. 1C is a perspective view of an electrolyzer system 300 according to an embodiment of the present disclosure. The system 300 may comprise a modular system in which the system components are located in separate module cabinets 204a-204g, 314 and 316. The system 300 includes electrolyzer (i.e., hydrogen generation) modules 200 located in respective cabinets 204a-204g. Each electrolyzer module 200 located in a respective cabinet 204a-204g comprises a hotbox 202 and balance of plant components (e.g., valves, conduits, blowers, sensors, etc.). The hotbox 202 houses one or more electrolyzer cell columns 210 and various heat exchangers and electrolyzer heaters that are described below.

The system also includes at least one power conditioning module 304 and at least one gas distribution module 306. A module cabinet 314 contains the power conditioning module 304 housing electrical components, such as a rectifier. The power conditioning module 304 may also include DC-DC converters. Alternatively, dedicated electrolyzer module DC-DC converters may be located in each respective module cabinet 204a - 204g. Thus, the system 300 power conditioning system may be located in the cabinet 314 for the power conditioning module 304, in the cabinets 204a-204g for the electrolyzer modules 200, or in both the cabinet 314 for the power conditioning module 304 and in the cabinets 204a-204g for the electrolyzer modules 200. The module cabinet 316 contains a gas distribution module 306 housing steam processing and control components for the electrolyzer system 300. In one embodiment, the module cabinets 204a-204g, 314 and/or 316 are located on the same base 318. Alternatively, the cabinet 316 may be located on a separate base. The base 318 may comprise a concrete base and/or a skid containing passages for various fluid and electrical connections between the cabinets.

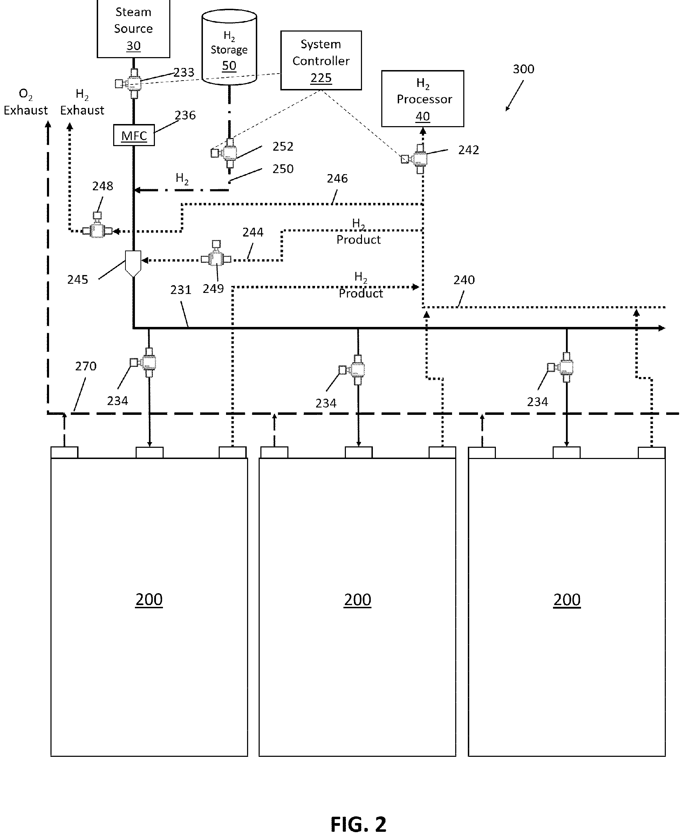

A remote server 308 may control aspects of the system 300 by communicating with the power conditioning module 304, the gas distribution module 306 or both, over a data communications network 310. The remote server 308 may be implemented using any appropriate computing technology, e.g., on a cloud computing platform or on a dedicated system of one or more computers each having one or more processors and memory storing instructions for the processors. The system controller 225 illustrated in FIG. 2 and described below may be implemented, for example, on the remote server 308 or a local dedicated logic or computer system or in a combination of both.

FIG. 2 is a schematic view of a portion of the electrolyzer system 300, according to various embodiments of the present disclosure. Referring to FIG. 2, the system 300 may include multiple fluidly connected electrolyzer modules 200. The electrolyzer modules (e.g., hydrogen generation modules) generate a hydrogen product from electrolysis of water (e.g., steam). While three modules 200 are shown, the system 300 may include any suitable number of modules 200. The system 300 may include a steam conduit (e.g., a pipe, header or manifold) 231 configured to fluidly connect each module 200 to a steam source 30, a product conduit (e.g., a pipe, header or manifold) 240 configured to fluidly connect each module 200 to a hydrogen processor 40, a hydrogen conduit (e.g., a pipe, header or manifold) 250 configured to fluidly connect a hydrogen storage vessel (e.g., hydrogen tank) 50 to the steam conduit 231, and an exhaust conduit (e.g., a pipe, header or manifold) 270 configured to receive oxygen exhaust from the modules 200. The steam source 30 may comprise any suitable source of steam, such as a building or factory steam source (e.g., external boiler, etc.), which provides byproduct steam to the steam conduit 231, and/or a dedicated steam generator which is part of the system 300. The hydrogen processor 40 may comprise any component which may compress and/or store the hydrogen product, such as a mechanical compressor, an electrochemical hydrogen separator (e.g., a proton exchange membrane), and/or a hydrogen storage vessel.

The system 300 may also include a system controller 225, an optional system recycling conduit 244, an optional vent conduit 246, and an optional ejector 245. The ejector 245 may be located on the steam conduit 231, and the system recycling conduit 244 may fluidly connect the product conduit 240 to the ejector 245 located on the steam conduit 231. The vent conduit 246 may fluidly connect the product conduit 240 to an individual module exhaust or to a common system exhaust conduit which is fluidly connected to the vent conduits 246 of all modules. The ejector 245 may operate to pull a portion of the hydrogen product stream from the product conduit 240 through the system recycling conduit 244 and into the steam conduit 231 to recycle a portion of the hydrogen product stream back into the modules 200, while a remaining portion of the hydrogen product stream is provided to the hydrogen processor 40. In some embodiments, the ejector 245 may be replaced with a system recycle blower.

The system 300 may also include various flow control elements to control fluid flow to and/or from the modules 200. For example, the system 300 may include a primary steam valve 233 and an optional mass flow controller 236 located on the steam conduit 231 and configured to control steam flow from the steam source 30 into the steam conduit 231, and optional module shutoff valves 234 located between the steam conduit 231 and the respective modules 200 and configured to control the steam flow from the steam conduit 231 into the respective modules 200. The system 300 may also include a product valve 242 located on the product conduit 240 and configured to control hydrogen product flow from the product conduit 240 into the hydrogen processor 40. The system 300 may also include an optional recycling valve 249 located on the optional system recycling conduit 244 and configured to control a flow of a portion of the hydrogen product stream through the system recycling conduit 244. The system 300 may also include a hydrogen valve 252 located on the hydrogen conduit 250 and configured to control hydrogen flow from the hydrogen storage vessel 50 into the hydrogen conduit 250. The hydrogen valve 252 may be opened during system startup and shutdown modes to provide hydrogen from the hydrogen storage vessel 50 to the modules 200, and closed during a steady state operating mode of the system 300 during which the system 300 generates the hydrogen product. The system 300 may also include a vent valve 248 located on the vent conduit 246 and configured to control hydrogen product flow through the vent conduit 246. For example, the vent valve 248 may be opened during system shutdown to vent the product conduit 240 and depressurize the system 300. In some embodiments, one or more of the valves may comprise gas solenoid valves or other suitable valves.

The system controller 225 may include a central processing unit and a memory. The system controller 225 may be wired or wirelessly connected to various elements of the system 300, and may be configured to control the same. The system controller may communicate and/or receive signals from sensors located on various components of the system 300 or from other controllers located in different modules, such as modules 200. Sensors may measure the temperature of stack components, voltage or current measurements, pressure in various conduits, the state of various valves, and the status of various modules (such as the operational status of the hydrogen processor 40, etc.). In addition, the system controller 225 may be configured to control the various valves and the operation of the modules 200. In one embodiment, the system controller 225 may be located in cabinet 314 housing power conditioning module 304. The power conditioning module 304 may also include an AC/DC rectifier configured to convert alternating current (AC) power from a power source (e.g., power grid) to direct current (DC) power provided to the electrolyzer modules 200. The remaining components of the system 300 may be located either in cabinet 316 housing gas distribution module 306 and cabinet 314 housing the power conditioning module 304, and/or outside the module housings of the system 300. For example, the steam source 30 and/or the hydrogen processor 40 may be located in the gas distribution module or separate from the module housings of the system 300. Likewise, the steam conduit 231 may extend from the gas distribution module to the electrolyzer modules 200 in or over a common base supporting the gas distribution module and the electrolyzer modules 200.

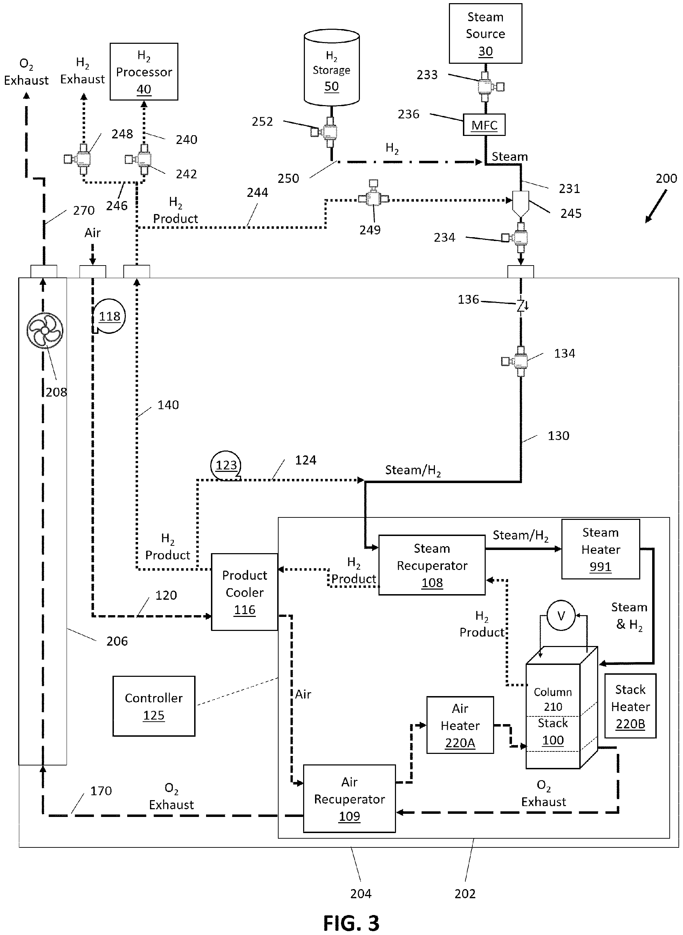

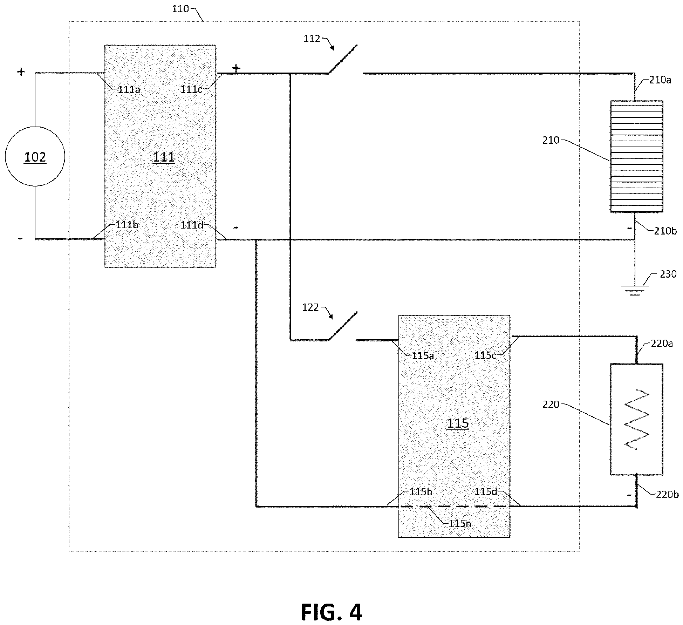

FIG. 3 is a schematic view of an electrolyzer module 200 that may be included in the electrolyzer system 300 of FIG. 2, according to various embodiments of the present disclosure. Referring to FIGS. 1A, 1B, 1C, 2 and 3, each module 200 may include an electrolyzer cell stack 100 including multiple electrolyzer cells, such as solid oxide electrolyzer cells (SOECs) 1, as described with respect to FIGS. 1A and 1B. The stack 100 may be located in an electrolyzer cell column 210 which includes plural stacks 100. Alternatively, the column 210 may contain only a single stack 100. The module 200 may also include a steam recuperator heat exchanger 108, one or multiple steam heaters 991, an air recuperator heat exchanger 109, and one or multiple air heaters 220A. The module 200 may also include an optional product cooler / air preheater heat exchanger 116, and an optional stack heater or heaters 220B (e.g., one or more column 210 heaters 220B). The stack heater(s) 220B may be located adjacent to the stack 100 (or adjacent to the column 210 containing the stack 100) to provide heat to the stack 100. The module 200 may include only one of the air heater(s) 220A or the stack heater(s) 220B, or both the air heater(s) 220A and the stack heater(s) 220B. The air heater(s) 220A and/or the stack heater(s) 220B are generally referred to in the embodiments of FIGS. 4 - 11 below as a "heater" 220 for simplicity.

The module 200 may include a hotbox 202 to house various components, such as the stack 100/column 210, the steam recuperator 108, the steam heater 991, the air recuperator 109, the air heater 220A and/or the stack heater 220B. In some embodiments, the hotbox 202 may include multiple stacks 100 and/or columns 210 of stacks 100. The module 200 may be housed in a cabinet 204 configured to house the hotbox 202 and other module 200 components located outside of the hotbox 202. Optionally, the module 200 may also include a controller 125, such as a central processing unit, which is configured to control the operation of the module 200. For example, the controller 125 may be wired or wirelessly connected to various elements of the module 200 to control the same. Alternatively, the controller 125 may be located outside the cabinet 204 of the electrolyzer module 200 (e.g., in the cabinet 314 housing power conditioning module 304 of the system 300). The product cooler / air preheater heat exchanger 116 can be located inside the hotbox 202, or it can be located outside of the hotbox 202.

During operation, the stack 100 may be provided with steam from the steam source 30 and may be provided with electric power (e.g., DC current or voltage) from an external power source, such as a power grid. In particular, the steam may be provided to the fuel electrodes 7 of the electrolyzer cells 1 of the stack 100, and the power source may apply a voltage between the fuel electrodes 7 and the air electrodes 3, in order to electrolyze water molecules at the fuel electrodes 7 to form hydrogen gas and oxygen ions. In SOECs 1, the oxygen ions are transported through the solid electrolyte 5 to the air electrodes 3. Air may optionally be provided to the air electrodes 3 of the stack 100, in order to sweep the oxygen from the air electrodes 3. The stack 100 may output a hydrogen stream (e.g., hydrogen product which may also contain residual steam) into a module product conduit 140, and an oxygen-rich exhaust stream (e.g., an oxygen exhaust stream), such as an oxygen-rich air stream (i.e., oxygen enriched air) into a module exhaust conduit 170.

The steam output from the steam source 30 may be provided to the multiple modules 200 via the steam conduit 231. The steam entering a module 200 from the steam conduit 231 may be provided to the steam recuperator 108 via a module steam conduit 130. The steam may include small amounts of dissolved air and/or oxygen. As such, the steam may be mixed with hydrogen gas, in order to maintain a reducing environment in the stack 100, and in particular, at the fuel electrodes 7. An optional shutoff valve 134 and an optional non-return valve 136 may be located on module steam conduit 130. The non-return valve 136 is configured to prevent the backflow of steam from the module steam conduit 130 into the steam conduit 231. However, in some embodiments, the non-return valve 136 may be omitted. For example, operation of the shutoff valve 134 may be sufficient to prevent steam backflow.

Hydrogen may be provided to the steam from the hydrogen storage vessel 50 and/or from a portion of the hydrogen product generated by the stack 100. The hydrogen addition rate may be set to provide an amount of hydrogen that exceeds an amount of hydrogen needed to react with an amount of oxygen dissolved in the steam. The hydrogen addition rate may either be fixed or set to a constant water to hydrogen ratio. However, if the steam is formed using water that is fully deaerated, the hydrogen addition may optionally be omitted.

In some embodiments, the hydrogen may be provided by the external hydrogen storage vessel 50 during system startup and shutdown. For example, during the system 300 startup and/or shutdown modes, hydrogen may be provided from the hydrogen storage vessel 50 to the steam conduit 231 via the hydrogen conduit 250. In contrast, during the steady state operation mode, a portion of the hydrogen product (i.e., hydrogen exhaust stream) may be diverted from the product conduit 240 to the steam conduit 231 via the recycling conduit 244, and the hydrogen flow from the hydrogen storage vessel 50 may be stopped by closing the shutoff valve 252 on the hydrogen conduit 250.

In some embodiments, the module 200 may include a recycle blower 123 configured to selectively divert a portion of the generated hydrogen product to the steam in the module steam conduit 130. For example, the recycle blower 123 may be located on a module recycling conduit 124 which fluidly connects a module product conduit 140 to the module steam conduit 130. Alternatively, a hydrogen pump may be used instead of the recycle blower 123. In some embodiments, the portion of the generated hydrogen product may be diverted from the module product conduit 140 to the module recycling conduit 124 by a splitter and/or valve.

The steam recuperator 108 may be a heat exchanger configured to recover heat from the hydrogen stream output from the stack 100 into the module product conduit 140. The steam may be heated to at least 600 °C, such as 620 °C to 780 °C (depending in part on the stack 100 operating temperature) in the steam recuperator 108.

The steam output from the steam recuperator 108 may be provided to the steam heater 991 which is located downstream from the steam recuperator 108 on the module steam conduit 130, as shown in FIG. 3. The steam heater 991 may include a heating element, such as a resistive or inductive heating element. The steam heater 991 may be configured to heat the steam to a temperature above the operating temperature of the stack 100. For example, depending on the health of the stack 100, the water utilization rate of the stack 100, and the air flow rate to the stack 100, the steam heater 991 may heat the steam to a temperature ranging from about 700 °C to about 850 °C, such as 720 °C to 780 °C. Accordingly, the stack 100 may be provided with steam or a steam-hydrogen mixture at a temperature that allows for efficient hydrogen generation. Heat may also be transported directly from the steam heater to the stack by radiation (i.e., by radiant heat transfer). If the stack operating current is sufficiently high to maintain the stack at a desired steady state operating temperature, then the steam heater and/or the air heater may be turned off. In some embodiments, the steam heater 991 may include multiple steam heater zones with independent power levels (divided vertically, circumferentially, or both), in order to enhance thermal uniformity.

An air blower 118 may provide an air inlet stream to the air recuperator 109 via a module air inlet conduit 120. The module air inlet conduit 120 fluidly connects the air blower 118 to an air inlet of the stack 100 through the product cooler / air preheater heat exchanger 116. The oxygen exhaust output from the stack 100 may be provided via the module exhaust conduit 170 to the air recuperator 109. The air recuperator 109 may be configured to heat the air inlet stream using heat extracted from the oxygen exhaust.

Air output from the air recuperator 109 may be provided to the air heater 220A via a continuation of the air inlet conduit 120 inside the hotbox. The air heater 220A may include a resistive or inductive heating element configured to heat the air to a temperature exceeding the operating temperature of the stack 100. For example, depending on the health of the stack 100, the water utilization rate of the stack 100, and the air flow rate to the stack 100, the air heater 220A may heat the air to a temperature ranging from about 700 °C to about 850 °C, such as 720 °C to 780 °C. Accordingly, the stack 100 may be provided with air at a temperature that allows for efficient hydrogen generation. Heat may also be transported directly from the air heater to the stack by radiation. In some embodiments, the air heater 220A may include multiple air heater zones with independent power levels (divided vertically or circumferentially or both), in order to enhance thermal uniformity. Air from the air heater 220A is provided to the air electrodes 3 of the stack 100.

Oxygen exhaust (e.g., oxygen enriched air) output from the air recuperator 109 may be provided to the exhaust conduit 270 via the module exhaust conduit 170 and an exhaust duct 206 of the cabinet 204. A fan 208 or multiple fans 208 may optionally be located in the exhaust duct 206 to improve oxygen exhaust flow through the exhaust conduit 270. The exhaust conduit 270 may be configured to receive oxygen exhaust output from multiple modules 200. In some embodiments, the exhaust conduit 270 may provide the exhaust to a chimney or may provide the air exhaust to the atmosphere. In other embodiments, the oxygen exhaust (e.g., oxygen enriched air) may be provided from the exhaust conduit 270 for purification and/or use. In some embodiments, the cabinet 204 may contain a cabinet ventilation fan that comprises the fan 208 or another fan in addition to the fan 208. The cabinet ventilation stream may be merged with the oxygen exhaust stream to lower the temperature and oxygen concentration of the oxygen exhaust stream before exhausting it to the atmosphere.

In some embodiments, the module 200 may include the optional product cooler / air preheater heat exchanger 116, which may be located outside (e.g., on top of) of the hotbox 202 or inside of the hotbox 202. The product cooler / air preheater heat exchanger 116 may be fluidly connected to the hydrogen product conduit 240 by the module product conduit 140. The product cooler / air preheater heat exchanger 116 may be configured to preheat the air inlet stream provided to the hotbox 202 via the module air inlet conduit 120 using heat from the hydrogen product in the module product conduit 140, and to cool a hydrogen product output from the stack 100 using the air inlet stream provided from the air blower 118.

The hydrogen product stream is output from the steam recuperator 108 and the optional product cooler / air preheater heat exchanger 116 via the module product conduit 140 and the product conduit 240 at a temperature of 100 °C to 200 °C. The hydrogen product stream may be compressed and/or purified in the hydrogen processor 40, which may include a hydrogen pump (e.g., proton exchange membrane electrochemical pump) that operates at a temperature of from about 40 °C to about 120 °C, in order to remove from about 70% to about 90% of the hydrogen from the hydrogen product stream. A remaining a water rich stream comprises a unpumped effluent from the hydrogen pump.

In various embodiments, the hydrogen processor 40 may include at least one electrochemical hydrogen pump, liquid ring compressor, diaphragm compressor or combination thereof. For example, the hydrogen processor may include a series of electrochemical hydrogen pumps, which may be located in series and/or in parallel with respect to a flow direction of the hydrogen stream, in order to compress the hydrogen stream. Electrochemical compression may be more electrically efficient than traditional compression. Traditional compression may occur in multiple stages, with interstage cooling and water knockout. The final product from compression may still contain traces of water. As such, the hydrogen processor 40 may include a dewatering device, such as a temperature swing adsorption reactor or a pressure swing adsorption reactor, to remove this residual water, if necessary.

The controller 125 (e.g., the module controller 125 or a combination of the module controller 125 and the system controller 225) may be configured to manage one or more operational parameters of the electrolyzer module 200 for operational targets, such as performance, efficiency, and longevity. The controller 125 may be configured to perform one or more of the following functions: monitoring (e.g., cell, stack or column voltage, current, temperature), data acquisition and processing from various sensors located in the module 200 (e.g., temperature sensor(s), such as thermocouple(s), pressure sensor(s) located on various conduits, mass flow sensors located on various conduits, current and/or voltage sensors, etc.), safety management (e.g., emergency shutdowns, load disconnects), power management (e.g., controlling balance of plant valves, blowers 118 and 123, etc.), and diagnostics and maintenance (e.g., logging error codes, providing maintenance alerts).

The controller 125 may be implemented using any appropriate computing technology. For example, the controller 125 may be implemented using one or more processors and memory storing instructions for the processors. In some examples, the controller 125 includes a communication interface (e.g., CAN bus, Modbus, or Ethernet), allowing the controller 125 to exchange information with the system controller 225 and/or external systems like supervisory control and data acquisition (SCADA) systems, user interfaces, etc.

FIG. 4 is a circuit diagram illustrating a power conditioning system 110, according to an embodiment of the present disclosure. The power conditioning system 110 may comprise a power conversion system including at least one DC-DC converter. Referring to FIG. 4, the electrolyzer system 300 includes at least one electrolyzer column 210 (which includes one or more electrolyzer cell stacks 100) as described above, the power conditioning system 110 and at least one heater 220. As the described above, the power conditioning system 110 may be located in each electrolyzer module 200 and/or in the power conditioning module 304. In one embodiment, each electrolyzer module 200 includes at least one electrolyzer column 210 (which includes one or more stacks 100) and at least one heater 220 located in the hotbox 202 and the power conditioning system 110 located in the electrolyzer module 200 housing 204 outside of the hotbox 202. As described above, the heater 220 may comprise at least one air heater 220A, at least one stack heater 220B, or both.

The power conditioning system 110 includes a main DC-DC converter 111 and an auxiliary DC-DC converter 115. In operation, the main DC-DC converter 111 may receive electric power from a power source (e.g., electric grid or a distributed power source) 102 and supply power to the electrolyzer column 210. The auxiliary DC-DC converter 115 may supply power from the main DC-DC converter 111 to the heater 220 (e.g., to the air heater 220A and/or to the stack heater 220B). The electric power may comprise AC power (e.g., alternating current) which is converted to DC power (e.g., direct current) by the rectifier in the power conditioning module 304 or DC power from a distributed DC power source.

The main DC-DC converter 111 includes a positive input terminal 111a, a negative input terminal 111b, a positive output terminal 111c, and a negative output terminal 111d. The auxiliary DC-DC converter 115 includes a positive input terminal 115a, a negative input terminal 115b, a positive output terminal 115c, and a negative output terminal 115d. The positive output terminal 115c of the auxiliary DC-DC 115 is electrically connected to a positive terminal 220a of the heater 220. The negative output terminal 115d of the auxiliary DC-DC 115 is electrically connected to a negative terminal 220b of the heater 220.

The power conditioning system 110 includes a main load isolation switch 112 electrically connecting the positive output terminal 111c of the main DC-DC converter 111 to a positive terminal 210a of the electrolyzer column 210. The power conditioning system 110 also includes an auxiliary load isolation switch 122 electrically connecting the positive output terminal 111c of the main DC-DC converter 111 to the positive input terminal 115a of the auxiliary DC-DC converter 115. The main load isolation switch 112 and the auxiliary load isolation switch 122 may be controlled, for example, by the module controller 125 and/or the system controller 225. The main load isolation switch 112 and the auxiliary load isolation switch 122 may be implemented using any appropriate switching technology. For example, the main load isolation switch 112 and the auxiliary load isolation switch 122 may be implemented using high-current, solid-state relays or contactors capable of handling the power levels supplied by the main and auxiliary DC-DC converters 111, 115. Alternatively, the main load isolation switch 112 and/or the auxiliary load isolation switch 122 may comprise solid state switches (e.g., transistors, etc.).

In some embodiments, the negative output terminal 11 1d of the main DC-DC converter 111 and a negative terminal 210b of the electrolyzer column 210 are electrically connected to a ground node 230. The negative output terminal 11 1d of the main DC-DC converter 111 may be electrically connected to the negative input terminal 115b of the auxiliary DC-DC converter 115.

Heat is generated within the electrolyzer column 210 due to I²R losses, where I is the current flowing through the electrolyzer column 210 and R is the resistance of the electrolyzer column 210. In one embodiment, the power conditioning system 110 illustrated in FIG. 4 may be useful, for example, in configurations where the electrolyzer column 210 operates at a current density that may produce a substantial amount of heat from the column, reducing the need for heat from the heater 220.

The power conditioning system 110 uses a two-level electrical architecture that may provide more efficient power distribution and control. The two-level electrical architecture may also allow for the use of smaller, less expensive power converters 111 and 115, which may reduce costs and reduce the overall size and weight of the system. The main DC-DC converter 111 may be an electrically isolated converter (i.e., having galvanic isolation between its input and its loads (i.e., column 210 and the heater 220)). In contrast, the auxiliary DC-DC converter 115 may be a non-isolated converter in which the negative input terminal 115b is directly tied to negative output terminal 115d, as shown by the dashed line 115n in FIG. 4.

In some embodiments, the main DC-DC converter 111 is rated to supply a total power capacity sufficient for both the electrolyzer column 210 and the heater 220, whereas the auxiliary DC-DC converter 115 is rated to supply power sufficient only for the heater 220. A DC-DC converter's rating refers to its maximum power capacity, which is typically determined by its ability to handle specific voltage and current levels. Increasing the rating means the converter must accommodate higher power, which requires larger components, such as inductors, capacitors, and heat dissipation systems, to manage the increased electrical and thermal loads. This often results in a larger, heavier, and more expensive converter. Conversely, by allowing for a lower rating, the auxiliary DC-DC converter 115 may be designed with smaller and less costly components, reducing its overall size and weight. This also simplifies thermal management requirements, leading to a cheaper design while still fulfilling the necessary power demands of the system within the constraints of its reduced rating.

As described above, since the main DC-DC converter 111 is an isolated power supply which provides galvanic isolation between its input terminals 111a, 111b and its loads (the electrolyzer column 210 and the heater 220), the auxiliary DC-DC converter 115 may not need to be an isolated converter. The negative signal of the auxiliary DC-DC converter 115 may be a pass through, such that the negative input terminal 115b of the auxiliary DC-DC converter 115 is electrically connected to the negative output terminal 115d of the auxiliary DC-DC converter 115 as shown by the dashed line 115n in FIG. 4.

The auxiliary load isolation switch 122 may be configured to isolate the auxiliary DC-DC converter 115 from the main DC-DC converter 111 output. This isolation may be useful, for example, in situations where the heater 220 is not in use or when there is a fault in the auxiliary DC-DC converter 115, e.g., such that the auxiliary DC-DC converter 115 may need to be replaced. For example, the controller 125 may detect that the electrolyzer column 210 has reached a target operating temperature or that there is a fault in the auxiliary DC-DC converter 115, and send a control signal to the auxiliary load isolation switch 122 to open the auxiliary load isolation switch 122. For example, the controller 125 may use an output of a temperature sensor, such as a thermocouple located in the hotbox 202 (e.g., in or adjacent to the column 210), to determine the column 210 temperature. The hotbox 202 temperature may be used as a proxy for determining the column 210 temperature. The controller 125 may use an output of a current or voltage sensor to determine that there is a fault in the auxiliary DC-DC converter 115.

The main load isolation switch 112 may be configured to isolate the electrolyzer column 210 from the main DC-DC converter 111 output. This isolation may be useful, for example, to isolate the electrolyzer column 210 during a cold start up. For example, the controller 125 and/or 225 may initiate a cold start operating mode and send a control signal to the main load isolation switch 112 to open the main load isolation switch 112, and to send a control signal to the auxiliary load isolation switch 122 to close the auxiliary load isolation switch 122. Thus, electric power is provided to the heater 220 through the main and auxiliary DC-DC converters 111, 115, while no electric power is provided to the column 210 during the cold start operating mode. The air blower 118 may be activated during the cold start operating mode to provide air to the column 210. The heater 220 heats the air provided to the column 210 (e.g., using the air heater 220A) and/or heats the column 210 itself (e.g., using the stack heater 220B) to raise the temperature of the column 210 to a desired steady state operating temperature (e.g., a temperature above 600 °C, such as from about 700 °C to about 850 °C).

As shown in FIG. 4, the main load isolation switch 112 and the auxiliary load isolation switch 122 are connected to the positive output terminal 111c of the main DC-DC converter 111 such that the negative part of the circuit remains intact even when the main load isolation switch 112 and the auxiliary load isolation switch 122 are open. In this configuration, grounding at one location (e.g., the ground node 230) may be sufficient. The heater 220 may still be grounded by virtue of the pass through negative connection in the auxiliary DC-DC converter 115.

The auxiliary DC-DC converter 115 output power is equal to the heater 220 input power. The auxiliary DC-DC converter 115 input power is equal to its output power divided by its efficiency. The main DC-DC converter 111 output power is equal to the sum of the column 210 input power and the auxiliary DC-DC converter 115 input power. The main DC-DC converter 111 input power is equal to its output power divided by its efficiency.

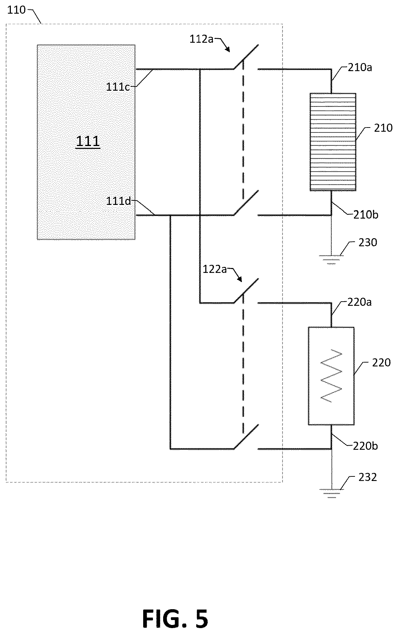

FIG. 5 is a circuit diagram of an alternative configuration of the power conditioning system 110, according to an alternative embodiment of the present disclosure. The power conditioning system 110 includes two-pole switches 112a, 122a: the main load isolation switch 112a and the auxiliary load isolation switch 122a. In this configuration, both positive and negative parts of the circuit may be isolated simultaneously. Accordingly, the electrolyzer column 210 and the heater 220 may each have a separate grounding path, such that the electrolyzer column 210 is grounded by a first ground node 230 and the heater 220 is grounded by a second ground node 232. In this alternative embodiment, the auxiliary DC-DC converter 115 may be omitted.

The power conditioning system 110 of FIG. 5 operates as follows. During the cold start operating mode, the main load isolation switch 112a is open and the auxiliary load isolation switch 122a is closed. The main DC-DC converter 111 supplies electric power to the heater 220 to heat the electrolyzer column 210. The electrolyzer column 210 does not receive electric power during the cold start operating mode because the main load isolation switch 112a is open. During the ramp up operating mode and the steady state operating modes, the auxiliary load isolation switch 122a is open, isolating the heater 220, and the main load isolation switch 112a is closed to connect the main DC-DC converter 111 to the electrolyzer column 210 to provide electric power to the electrolyzer column 210. In this embodiment, the heat generated by the electrolyzer column 210 is sufficient to keep the electrolyzer column 210 at the target steady state operating temperature, so there is no need for the heater 220 to provide additional heat to the electrolyzer column 210, which is operating at or close to its rating. The cost of the power conditioning system 110 of FIG. 5 is lower than the cost of the power conditioning system 110 of FIG. 4. However, the electrolyzer column 210 of FIG. 5 operates in the steady state operating mode at or close to its rating and is designed to generate sufficient heat to keep the electrolyzer column 210 at the target steady state operating temperature.

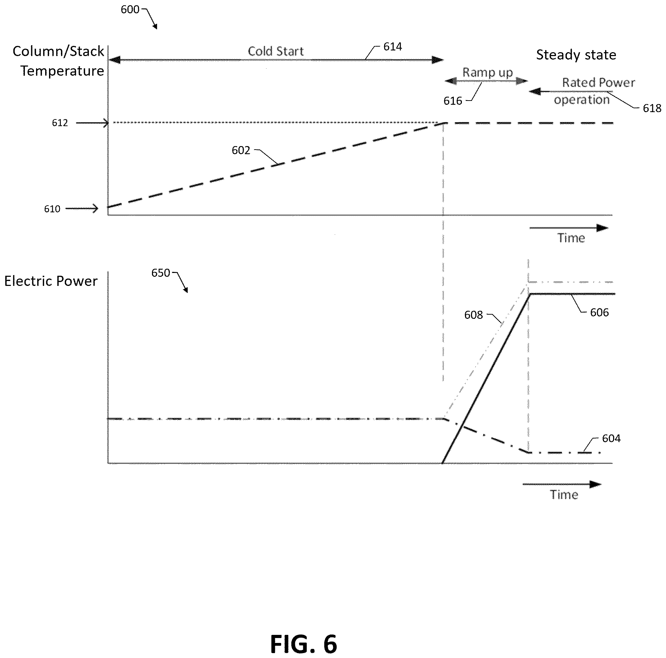

FIG. 6 shows two timeline graphs 600, 650 illustrating the electrolyzer column 210 temperature and power applied to the electrolyzer column 210 and the heater 220 as a function of time during different operational phases of the electrolyzer module 200. The top graph 600 shows electrolyzer column 210 temperature 602 as a function of time. The bottom graph 650 shows the heater 220 power 604, column 210 power 606, and total (heater 220 plus column 210) power 608 applied to the column 210 and the heater 220 as a function of time.

The top graph 600 shows the electrolyzer column 210 temperature 602 rising from an ambient temperature 610 to a target steady state operating temperature 612 during the cold start operating mode 614. The controller 125 may be configured to turn on the heater 220 to complete the cold start operating mode 614 over a predetermined duration by applying heat from the heater 220 to the air inlet stream provided to the column 210 and/or directly to the column 210. During the cold start operating mode 614, the controller 125 may open the main load isolation switch 112 and close the auxiliary load isolation switch 122, causing electric power to flow from the power source (e.g., electric grid or a distributed power source) 102, through the main DC-DC converter 111, and through the auxiliary DC-DC converter 115 to the heater 220. The bottom graph 650 shows the heater 220 drawing a constant amount of electric power during the cold start operating mode 614.

Once the target steady state operating temperature 612 is reached, the electrolyzer module 200 enters a ramp up operating mode 616, during which the electrolyzer column 210 begins drawing electric power from the main DC-DC converter 111. During the ramp up operating mode 616, the controller 125 closes the main load isolation switch 112 so that power may flow from the power source 102 to the electrolyzer column 210, while the auxiliary load isolation switch 122 remains closed. The column 210 power 606 may ramp from zero power to full rated power (e.g., the desired power for the steady state operating mode) over a predetermined period of time. The ramp time may be on the order of a few tens of seconds to a few minutes, depending on various operating conditions within the electrolyzer module 200 as well as in downstream equipment, such as the hydrogen processor 40. The column 210 begins to receive the steam during the ramp up operating mode 616 and begins to generate the hydrogen product stream by electrolyzing the steam.

As the column 210 power 606 increases, the amount of I²R heat loss also increases. As the I²R heat loss increases, the demand for heater 220 power 604 decreases. For example, the controller 125 may control the heater 220 to draw less power (e.g., less current) and produce less heat while the column 210 draws more power and begins to generate heat. During the ramp up operating mode 616, the main DC-DC converter 111 may provide the total power 608, while the auxiliary DC-DC converter 115 only provides the heater power 604.

Thus, during the ramp up operating mode 616, the controller 125 is configured to close the main load isolation switch 112 to provide electric power to the electrolyzer column 210 when the electrolyzer column 210 reaches a target steady state operating temperature; control the main DC-DC converter 111 to gradually increase its power output until the electrolyzer column 210 reaches its rated power for the steady state operating mode; and control the auxiliary DC-DC converter 115 to gradually decrease its power output such that power provided to the heater 220 is decreased to a steady state operating mode power.

After the ramp up operating mode 616, the system reaches the steady state (i.e., full rated power) operating mode 618. The controller 125 may keep both the main load isolation switch 112 and the auxiliary load isolation switch 122 closed during the steady state operating mode 618, during which the electrolyzer column 210 draws substantially constant electric power corresponding to its hydrogen production from electrolyzing steam. The heater 220 may be configured to provide enough heat to supplement the heat produced by I²R losses to maintain the electrolyzer column 210 at the target steady state temperature 612. The main DC-DC converter 111 may provide the total power 608, while the auxiliary DC-DC converter 115 may provide the constant reduced heater power 604 during the steady state operating mode 618. Thus, the heater 220 draws a larger constant first power during the cold start operating mode 614 than a constant second power during the steady state operating mode 618. The heater power 604 drops from the first power to the second power during the ramp up operating mode 616. Thus, the heater 220 draws electric power during all three modes 612, 616, 618, while the column 210 draws electric power only during the ramp up operating mode 616 and the steady state operating mode 618.

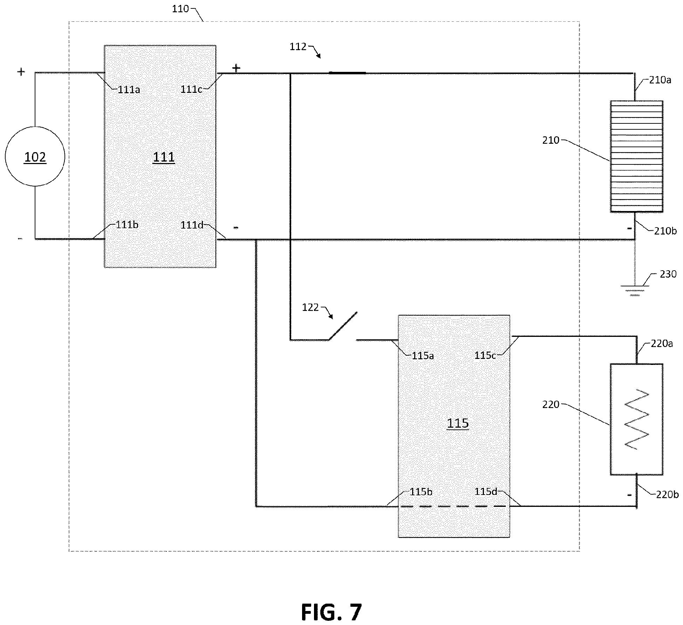

In an alternative embodiment, the heater 220 may be disconnected from the main DC-DC converter 111 and the power source 102 while the electrolyzer column 210 continues to produce hydrogen during the ramp up operating mode 616 and/or the steady state operating mode 618. FIG. 7 is a circuit diagram illustrating a situation where the main load isolation switch 112 is closed, so that the electrolyzer column 210 is receiving power from the main DC-DC converter 111, while the auxiliary load isolation switch 122 is open, so that the heater 220 is not receiving power during steady state operating mode 618.

This configuration may be useful, for example, when heat generated in the electrolyzer column 210 through I²R losses is sufficient to keep the electrolyzer column 210 at the target steady state operating temperature, and therefore heater 220 power is no longer required. In another example, there may be a failure in the auxiliary DC-DC converter 115, but I²R losses in the electrolyzer column 210 are still sufficient to produce enough heat to run the electrolyzer column 210 at a temperature lower than the target steady state operating temperature but still acceptable for a period of time until the auxiliary DC-DC converter 115 is replaced or repaired.

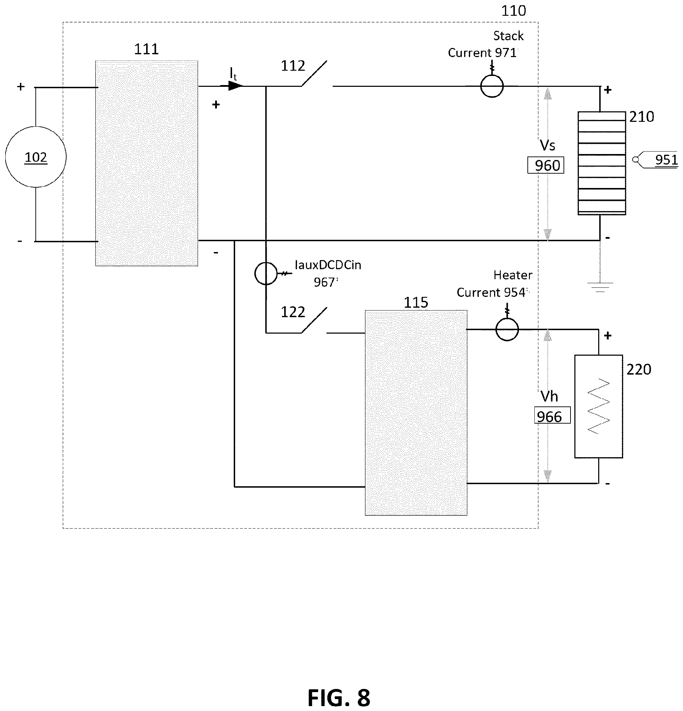

FIG. 8 is a circuit diagram illustrating voltage and current feedback sensors for control loops, according to an embodiment of the present disclosure. The sensors include a temperature sensor 951 configured for measuring a temperature of the electrolyzer column 210. The temperature sensor 951 may be a thermocouple located near or inside the column 210. The sensors also include an electrolyzer column voltage sensor 960 configured to measure a voltage Vs across the electrolyzer column 210 and a heater voltage sensor 966 configured to measure a voltage Vh across the heater 220. The sensors may also include a heater current sensor 954 configured to measure current flowing from the auxiliary DC-DC converter 115 to the heater 220, an auxiliary switch current sensor 967 configured to measure current flowing to the auxiliary load isolation switch 122, and an electrolyzer column current sensor 971 configured to measure current flowing to the electrolyzer column 210.

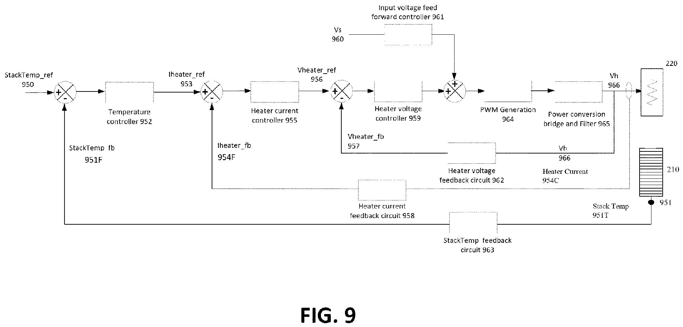

FIG. 9 is a block diagram of a control loop for the auxiliary DC-DC converter 115, according to an embodiment of the present disclosure. The control loop may be configured to maintain the temperature of the electrolyzer column 210 in closed-loop control. The control loop may be implemented, for example, in the controller 125.

The temperature value 951T of the electrolyzer column 210 is measured with the temperature sensor 951 and then processed by a stack temperature feedback circuit 963. The output of stack temperature feedback circuit 963 is stack temperature feedback value 951F from the temperature sensor 951. This value 951F is compared with stack temperature reference value 950, and the difference between the reference and feedback temperatures is processed by temperature controller 952 to obtain the current reference value 953.

The heater current value 954C is obtained from the current sensor 954 and provided to the heater current feedback circuit 958 which outputs a current feedback value 954F. This current feedback value 954F is compared with the heater current reference value 953, and the difference between them is processed by heater current controller 955 to obtain the heater voltage reference value 956.

The voltage sensor 966 provides the measured voltage Vh to the heater voltage feedback circuit 962. The heater voltage feedback circuit 962 outputs heater voltage feedback value 957F. The voltage reference value 956 is provided to the inner voltage loop, where it is compared with the heater voltage feedback value 957F. The difference between them is processed by the heater voltage controller 959.

An input voltage feedforward controller 961 receives the voltage Vs value from the sensor 960. The output value of heater voltage controller 959 is added to the output of input voltage feedforward controller 961 output, and the sum value is provided to the pulse width modulation (PWM) generation circuit 964. The output value of the PWM generation circuit 964 drives the power conversion bridge and filter circuit 965. The output value of the power conversion and filter circuit is the value of the electric power provided to heater 220.

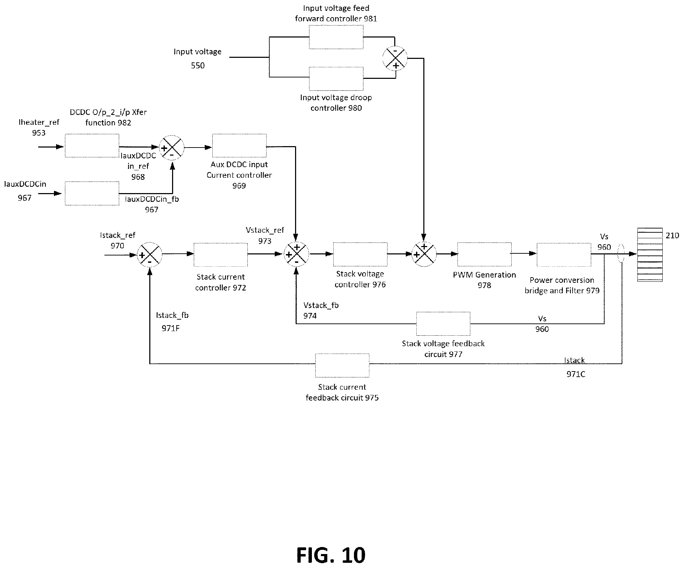

FIG. 10 is a block diagram of a control loop for the main DC-DC converter 111, according to an embodiment of the present disclosure. The control loop may be configured to maintain the voltage Vs of the electrolyzer column 210 at level sufficient to provide power to the auxiliary DC-DC converter 115 in addition to driving the desired current to the electrolyzer column 210 in closed-loop control. The control loop may be implemented, for example, in the controller 125.

The electrolyzer column current sensor 971 may output the measured electrolyzer column 210 current value 971C. This current value 971C is provided to stack current feedback circuit 975, which outputs a stack current feedback value 971F. The stack current feedback value 971F is compared with stack reference current value 970. The difference between them is provided to a stack current controller circuit 972 which outputs a stack voltage reference value 973.

In addition, the heater current reference value 953 is compared to the input side of the auxiliary DC-DC converter 115 current value using the transfer function 982 to obtain the auxiliary DC-DC converter input current reference value 968. This auxiliary DC-DC converter input current reference value 968 is compared with the actual input current feedback value 967 of the auxiliary DC-DC converter 115. The difference between these values is then provided to an auxiliary DCDC input current controller circuit 969. The output value of the circuit 969 is added to a stack voltage reference value 973 to obtain the overall voltage reference value. This is compared with actual stack output voltage feedback 974. The difference is then provided to a stack voltage controller circuit 976.

The input voltage 550 of the main DC-DC converter 111 is provided to two controller circuits: the input voltage feedforward controller 981 and input voltage droop controller 980. The function of the input voltage feedforward controller 981 is to mitigate the effects of input voltage 550 variations by quickly adjusting the duty cycle based on the level of input voltage. However, this adjustment may be only allowed when the input voltage is within the acceptable range of the main DCDC converter 111. If the voltage goes out of this acceptable voltage range, then the droop controller 980 will adjust the power drawn from the power source 102 to keep the input voltage 550 within the acceptable range. In other words, in some embodiments, only one of the voltage feedforward controller 981 or droop controller 980 is active any point in time, depending on the level of input voltage 550.

The output values of these two controllers 980 and 981 are then combined using a comparator and then added to stack voltage controller 976 output value and provided to a power module (PWM) generation circuit 978. The output of the PWM generation circuit 978 drives the power conversion bridge and filter circuit 979. The output value of the power conversion bridge and filter circuit 979 is the electric power output of the main DC-DC converter 111 that is provided directly to the electrolyzer column 210, and indirectly to the heater 220 through the auxiliary DC-DC converter 115.

In some embodiments, the required heater power decreases as the segment current increases. This means that the total power of the heater and stack powers at any given instant of its entire life cycle may be smaller than sum of the peak powers of the heater and stacks during the cold start and steady state operating modes. Therefore, it may be advantageous to have one DC-DC converter that is designed for total power, instead of designing two separate isolated DC-DC converters for stack and heater peak powers. To control heater currents independently from stack currents, a separate DC-DC converter such as the auxiliary DC-DC converter 115, can be used, but it can be a non-isolated power supply.

This combination of a main isolated DC-DC converter 111 and a non-isolated auxiliary DC-DC converter 115 may be less expensive, may have a smaller footprint, and may be more efficient than some conventional systems using two separate isolated DC-DC converters that are used in some conventional high temperature electrolyzers.

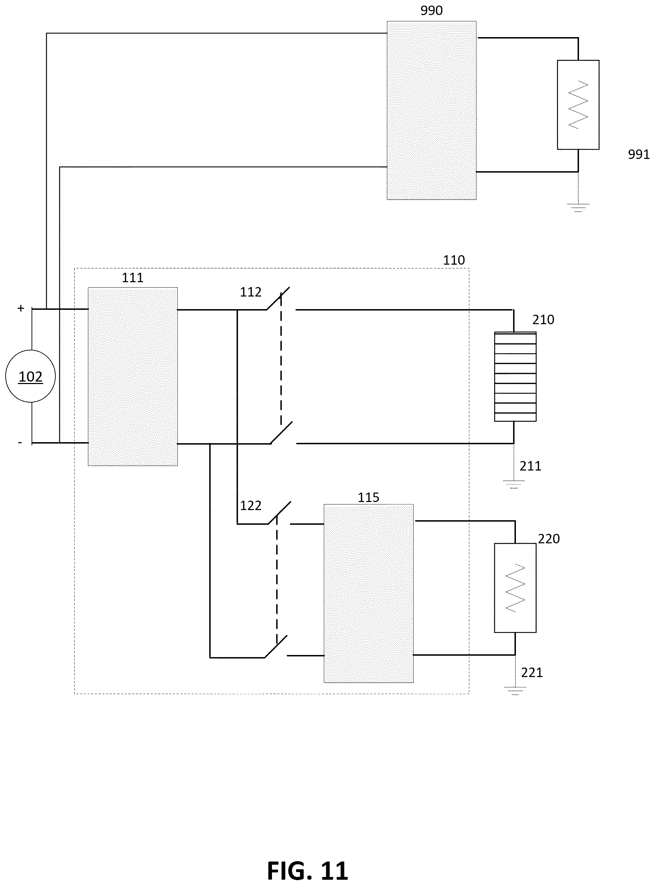

FIG. 11 is a circuit diagram illustrating the steam heater 991 and a steam heater DC-DC converter 990, according to an embodiment of the present disclosure. The steam heater DC-DC converter 990 may be coupled to the same power source 102 which provides the same input voltage 550 as the main DC-DC converter 111. The steam heater DC-DC converter 990 includes an output coupled to the steam heater 991. The steam heater DC-DC converter 990 controls provision of electric power to the steam heater 991. Thus, the steam heater 991 is electrically connected to a separate DC-DC converter 990 than the heater 220 (e.g., the air heater 220A and/or the stack heater 220B) and the electrolyzer column 210, and its power may be separately controlled from that of the heater 220 and the column 210. The steam heater 991 may be operated during the steady state operating mode 618 and optionally during the ramp up operating mode 616 by receiving power from the steam heater DC-DC converter 990. The steam heater 991 may optionally be turned off by the steam heater DC-DC converter 990 during the cold start operating mode 614 by not providing electric power to the steam heater 991.

As discussed above, the required heater 220 power decreases as the column 210 input power (i.e., DC current) increases. This means that the total power 608 of the heater 220 power 604 and the column 210 power 606 at any given instant of its entire life cycle is smaller than sum of the peak powers of the heater 220 and the column 210 during the cold start and the steady state operating modes. Therefore, it is advantageous to have one main DC-DC converter 111 that is designed for total power 608, instead of two separate isolated DC-DC converters for column and heater peak powers. In order to control heater 220 electric power (i.e., input current) independently from the column 210 electric power (i.e., input current), a separate non-isolated auxiliary DC-DC converter 115 may be used. The combination of one isolated main DC-DC converter 111 and one non-isolated auxiliary DC-DC converter 115 is less expensive, has a smaller footprint, and is more efficient than the two separate isolated DC-DC converters. This reduces the total cost and operating cost of the electrolyzer system 300.

Electrolyzer systems of the embodiments of the present disclosure are designed to reduce greenhouse gas emissions and have a positive impact on the climate.

The foregoing descriptions are provided merely as illustrative examples and are not intended to require or imply that the steps of the various embodiments must be performed in the order presented. As will be appreciated by one of skill in the art, the order of steps in the foregoing embodiments may be performed in any order. Words such as "thereafter," "then," "next," etc. are not necessarily intended to limit the order of the steps; these words may be used to guide the reader through the description of the methods. Further, any reference to claim elements in the singular, for example, using the articles "a," "an" or "the" is not to be construed as limiting the element to the singular. Further, any step or component of any embodiment described herein may be used in any other embodiment.

The preceding description of the disclosed aspects is provided to enable any person skilled in the art to make or use the present invention. Various modifications to these aspects will be readily apparent to those skilled in the art, and the generic principles defined herein may be applied to other aspects without departing from the scope of the invention. Thus, the present invention is not intended to be limited to the aspects shown herein but is to be accorded the widest scope consistent with the principles and novel features disclosed herein.

## Claims

1. A system, comprising:
an electrolyzer column comprising electrolyzer cells, a first terminal and a second terminal;
a heater configured to heat the electrolyzer column; and
a power conditioning system comprising:
a main DC-DC converter comprising a first output terminal and a second output terminal;
an auxiliary DC-DC converter comprising a first input terminal, a second input terminal, a first output terminal electrically connected to the heater, and a second output terminal electrically connected to the heater;
a main load isolation switch electrically connecting the first output terminal of the main DC-DC converter to the first terminal of the electrolyzer column; and
an auxiliary load isolation switch electrically connecting the first output terminal of the main DC-DC converter to the first input terminal of the auxiliary DC-DC converter.

2. The system of claim 1, wherein the main DC-DC converter is an isolated DC-DC converter, and the auxiliary DC-DC converter is a non-isolated DC-DC converter.

3. The system of claim 2, wherein:
the first terminal of the electrolyzer column is a positive terminal and the second terminal of the electrolyzer column is a negative terminal;
the first input terminal of the auxiliary DC-DC converter is a positive terminal and the second input terminal of the auxiliary DC-DC converter is a negative terminal;
the first output terminal of the auxiliary DC-DC converter is positive terminal and the second output terminal of the auxiliary DC-DC converter is a negative terminal;
the second input terminal of the auxiliary DC-DC converter is electrically connected to the second output terminal of the auxiliary DC-DC converter; and
the first output terminal of the main DC-DC converter is a positive terminal and the second output terminal of the main DC-DC converter is a negative terminal.

4. The system of claim 3, wherein the second output terminal of the main DC-DC converter and the second terminal of the electrolyzer column are electrically connected to a ground node.

5. The system of claim 3, wherein the second output terminal of the main DC-DC converter is electrically connected to the second terminal of the electrolyzer column and the second input terminal of the auxiliary DC-DC converter.

6. The system of claim 2, wherein the main DC-DC converter is rated to supply a total electric power sufficient for both the electrolyzer column and the heater, and wherein the auxiliary DC-DC converter is rated to supply electric power sufficient only for the heater.

7. The system of claim 1, further comprising a controller, wherein the controller is configured to control the operation of the main DC-DC converter, the auxiliary DC-DC converter, the main load isolation switch, and the auxiliary load isolation switch.

8. The system of claim 7, wherein the controller is configured to:
open the main load isolation switch during a cold start operating mode to isolate the electrolyzer column from the main DC-DC converter such that the electrolyzer column does not receive electric power;
to control the auxiliary DC-DC converter to provide the electric power to the heater during the cold start operation until the electrolyzer column reaches a target steady state operating temperature;
close the main load isolation switch to provide electric power to the electrolyzer column in a ramp up operating mode when the electrolyzer column reaches the target steady state operating temperature;
control the main DC-DC converter to gradually increase its electric power output in the ramp up operating mode until the electrolyzer column reaches its rated electric power for a steady state operating mode; and
control the auxiliary DC-DC converter to gradually decrease its electric power output such that the electric power provided to the heater is decreased to a steady state operating mode electric power,
wherein the electrolyzer column is configured to electrolyze steam to generate a hydrogen product stream in the steady state operating mode.

9. The system of claim 7, further comprising:
a temperature sensor configured to measure a temperature of the electrolyzer column, wherein the controller is configured to regulate an electric power output of the auxiliary DC-DC converter to the heater based on the measured temperature of the electrolyzer column provided by the temperature sensor; and
a fault detection circuit configured to detect a failure in the auxiliary DC-DC converter, and in response to detecting the failure, signal the controller to open the auxiliary load isolation switch.

10. The system of claim 1, wherein:
the electrolyzer column comprises a solid oxide electrolyzer cell column; and
the heater comprises at least one of an air heater which is configured to heat air provided to the electrolyzer column, or a stack heater configured to directly heat the electrolyzer column.

11. A method of operating an electrolyzer system, comprising:
providing electric power from a main DC-DC converter to an electrolyzer column comprising electrolyzer cells and to an auxiliary DC-DC converter; and
providing the electric power from the auxiliary DC-DC converter to a heater to heat the electrolyzer column.

12. The method of claim 11, further comprising:
operating the main DC-DC converter to provide the electric power from a positive terminal and a negative terminal of the main DC-DC converter to a positive terminal and a negative terminal of the electrolyzer column;
operating an auxiliary DC-DC converter to provide the electric power from an output positive terminal and an output negative terminal of the auxiliary DC-DC converter to the heater to heat the electrolyzer column;
controlling a main load isolation switch to selectively allow or prevent the electric power flow from the positive terminal of the main DC-DC converter to the positive terminal of the electrolyzer column; and
controlling an auxiliary load isolation switch to selectively allow or prevent the electric power flow from the positive terminal of the main DC-DC converter to an input positive terminal of the auxiliary DC-DC converter.

13. The method of claim 12, further comprising:
opening the main load isolation switch to prevent the electric power flow from the main DC-DC converter to the electrolyzer column during a cold start operating mode of the electrolyzer column;
closing the auxiliary load isolation switch to provide the electric power from the main DC-DC converter through the auxiliary DC-DC converter to the heater during the cold start operating mode until the electrolyzer column reaches a target steady state operating temperature;
closing the main load isolation switch to provide the electric power to the electrolyzer column in a ramp up operating mode when the electrolyzer column reaches the target steady state operating temperature;
controlling the main DC-DC converter to gradually increase its electric power output in the ramp up operating mode until the electrolyzer column reaches its rated electric power for a steady state operating mode; and
controlling the auxiliary DC-DC converter to gradually decrease its power output such that electric power provided to the heater is decreased to a steady state operating mode electric power.

14. The method of claim 13, further comprising providing steam and air to the electrolyzer column in the steady state operating mode, and electrolyzing the steam to generate a hydrogen product stream,
wherein:
the electrolyzer column comprises a solid oxide electrolyzer cell column;
the heater comprises at least one of an air heater which heats the air provided to the electrolyzer column, or a stack heater which directly heat the electrolyzer column; and
the main DC-DC converter is an isolated DC-DC converter, and the auxiliary DC-DC converter is a non-isolated DC-DC converter.

15. A method of operating an electrolyzer system, comprising:
during a cold start operating mode, providing electric power from a DC-DC converter to a heater to heat an electrolyzer column comprising electrolyzer cells until the electrolyzer column reaches a target steady state operating temperature by closing an auxiliary load isolation switch between the DC-DC converter and the heater, and opening a main load isolation switch between the DC-DC converter and the electrolyzer column to prevent the electric power flow from the DC-DC converter to the electrolyzer column; and
during a steady state operating mode, closing the main load isolation switch to provide the electric power from the DC-DC converter to the elec- trolyzer column such that the electrolyzer column electrolyzes steam to generate a hydrogen product stream, and opening the auxiliary load isolation switch between the DC-DC converter and the heater to prevent the electric power flow from the DC-DC converter to the heater.
